# EUROPEAN PATENT APPLICATION

(11) **EP 4 787 040 A1**
(43) Date of publication of application: **05.08.2026**
(21) Application number: 24872723.2
(22) Date of filing: 16.08.2024
(51) Int. Cl.: G02B 7/00, G02B 7/02, G03B 17/12, H04N 23/54, H04N 23/55

(54) **CAMERA MODULE AND MANUFACTURING METHOD THEREFOR**

(30) Priority: 25.09.2023 KR 20230128628; 20.12.2023 KR 20230187684
(71) Applicant: LG Innotek Co., Ltd., Seoul 07796 (KR)
(72) Inventor: LEE, Jeong Hun, Seoul 07796 (KR); PARK, Je Kyung, Seoul 07796 (KR); KIM, Sang Woo, Seoul 07796 (KR)
(74) Representative: Plasseraud IP
(86) International application number: PCT/KR2024/012228
(87) International publication number: WO 2025/071014

(57) **Abstract**

This camera module comprises: a holder including a first barrel portion, a second barrel portion, and a third barrel portion; a first lens module coupled to the first barrel portion and including a first flange; a second lens module coupled to the second barrel portion and including a second flange; a third lens module coupled to the third barrel portion and including a third flange; a housing disposed at the rear of the holder; a first substrate module disposed in a space within the housing and facing the first lens module in the optical axis direction; a second substrate module disposed in the space within the housing and facing the second lens module in the optical axis direction; a third substrate module disposed in the space within the housing and facing the third lens module in the optical axis direction; first adhesive members disposed between the holder and the first substrate module, between the holder and the second substrate module, and between the holder and the third substrate module; and second adhesive members disposed between the first flange and the first barrel portion, between the second flange portion, and between the third flange and the third barrel portion.

## Description

### [Technical Fields]

The teachings in accordance with exemplary and non-limiting embodiments of the present invention relate generally to a camera module and manufacturing method therefor.

### [Background Arts]

Recently, ultra-compact camera modules have been developed and are widely used in small electronic devices such as smartphones, laptops, and gaming consoles.

With the widespread adoption of automobiles, miniature cameras are now extensively employed not only in small electronic devices but also in vehicles. For instance, vehicles are equipped with dashcam cameras for protection or to provide objective evidence in the event of a traffic accident, rear-view cameras enabling drivers to monitor blind spots at the rear of the vehicle via a screen to ensure safety when reversing, and perimeter detection cameras capable of monitoring the vehicle's surroundings.

The camera comprises a lens, a lens barrel accommodating the lens, an image sensor converting the image of the subject gathered by the lens into an electrical signal, and a printed circuit board on which the image sensor is mounted. The housing forming the exterior of the camera is constructed with a fully sealed structure to prevent internal components from contamination by foreign substances, including moisture.

Camera modules based on conventional technology suffer from the problem that, during the assembly process between the lens and the holder, the mechanical axis and the optical axis are not precisely aligned, resulting in unsatisfactory captured images.

### [Detailed Description of the Invention]

### [Technical Subjects]

This embodiment provides a camera module capable of acquiring optimal images by precisely aligning the lens, holder, and substrate without error.

### [Technical Solution]

A camera module according to one embodiment of the present invention may comprise: a holder including a first barrel portion, a second barrel portion, and a third barrel portion; a first lens module coupled to the first barrel portion and including a first flange; a second lens module coupled to the second barrel portion and including a second flange; a third lens module coupled to the third barrel portion and including a third flange; a housing disposed at the rear of the holder; a first substrate module disposed in a space within the housing and facing the first lens module in the optical axis direction; a second substrate module disposed in the space within the housing and facing the second lens module in the optical axis direction; a third substrate module disposed in the space within the housing and facing the third lens module in the optical axis direction; first adhesive members disposed between the holder and the first substrate module, between the holder and the second substrate module, and between the holder and the third substrate module; and second adhesive members disposed between the first flange and the first barrel portion, between the second flange portion, and between the third flange and the third barrel portion.

Preferably, but not necessarily, the first adhesive member and the second adhesive member may each be epoxy.

Preferably, but not necessarily, the rear surface of the holder may include a guide protruding rearwards, which is coupled with the front surface of the first substrate module, the front surface of the second substrate module, and the front surface of the third substrate module.

Preferably, but not necessarily, the first substrate module, the second substrate module, and the third substrate module may each comprise: a first substrate with an image sensor disposed on its front surface; a second substrate disposed at the rear of the first substrate; a connecting substrate connecting the first substrate and the second substrate; and a shield can disposed between the first substrate and the second substrate.

Preferably, but not necessarily, the projected height of the first to third barrel portions from the front of the holder may differ from one another.

Preferably, but not necessarily, the front surfaces of the first to third lens modules may be disposed with a step-down configuration relative to each other along the optical axis direction.

Preferably, but not necessarily, the first adhesive member and the second adhesive member may each have a closed-loop configuration.

Preferably, but not necessarily, the housing may include a connector protruding rearwardly from the rear surface of the second substrate, and may include a connector withdrawal portion protruding rearwardly from the rear surface to accommodate the connector internally.

A manufacturing method of camera module according to another embodiment of the present invention may comprise the steps of: (a) aligning the lens module via a first light source, a first sensor, and a first gripper; (b) aligning a holder using a second light source, a second sensor, and a second gripper; (c) coupling the lens module from step (a) with the holder from step (b); (d) coupling the substrate module with the rear surface of the holder according to step (c); and (e) aligning the optical axes between the image sensor within the substrate module and the lens within the lens module.

The manufacturing method of camera module may further comprise the steps of: applying a first adhesive member between the substrate module and the holder prior to step (e); and curing the first adhesive member after step (e).

### [Advantageous Effects]

Through this embodiment, because, prior to the bonding of the substrate module, the lens module and holder are aligned through respective separate processes, and subsequently bonding the lens module to the holder and the holder to the substrate module using an adhesive material, and compared to conventional camera modules where only the alignment process of the lens and image sensor with the attached holder is performed, this approach offers the advantage of minimizing the occurrence of optical axis deviation caused by assembly tolerances between multiple components.

### [Brief Description of Drawings]

FIG. 1 is a perspetive view showing the exterior of a camera module according to an embodiment of the present invention.
FIG. 2 is a cross-sectional view of the camera module according to an embodiment of the present invention.
FIG. 3 is an exploded perspetive view of the camera module according to an embodiment of the present invention.
FIG. 4 is a view of FIG. 3 from a different angle.
FIG. 5 is a block diagram of a manufacturing apparatus for the camera module according to an embodiment of the present invention.
FIG. 6 is an illustration for explaining the alignment process of the lens module according to an embodiment of the present invention.
FIG. 7 is a flowchart of a manufacturing method for the camera module according to an embodiment of the present invention.
FIG. 8 is a perspective view of a vehicle according to an embodiment of the present invention.

### [Best Modes]

Hereinafter, the attached drawings are referred to in detail to explain the preferred embodiment of the present invention.

However, the technical idea of the present invention is not limited to the some embodiments described, but can be implemented in various different forms, and within the scope of the technical idea of the present invention, one or more of the components between the embodiments can be selectively combined or replaced.

In addition, the terms used in the embodiments of the present invention (including technical and scientific terms) can be interpreted to mean what a person with ordinary skill in the art would understand, unless explicitly defined and described, and generally understood by a person with ordinary skill in the art. Generally used terms, such as those defined in dictionaries, can be interpreted in the context of the relevant technology.

Furthermore, the terms used in the embodiments of the present invention are intended to explain the embodiments and are not intended to limit the invention.

In this specification, the singular form may include the plural form unless otherwise specified in the text, and when described as 'A and (and/and) B, C, at least one (or more than one) of A, B, and C,' it may include one or more of all combinations of A, B, and C.

In addition, terms such as 1, 2, A, B, (a), and (b) may be used to describe the components of the embodiments of the present invention. Such terms are intended only to distinguish the component from other components and are not limited by the nature, order, or sequence of the component.

And, if any component is described as being 'connected', 'coupled' or 'attached' to another component, that component may be directly connected, coupled or attached to that other component, as well as being 'connected', 'coupled' or 'attached' to another component that is between that component and that other component.

In addition, when it is stated that each component is formed or arranged 'above or below', the above or below includes not only the case where two components are directly in contact with each other, but also the case where one or more other components are formed or arranged between the two components. In addition, when it is expressed as 'upper or lower', it can include the meaning of the lower direction as well as the upper direction based on one component.

The "optical axis direction" used hereinafter is defined as the optical axis direction of the lens. Meanwhile, the "optical axis direction" may correspond to the "vertical direction", "z-axis direction", etc.

Hereinafter, the present invention will be described in greater detail with reference to the accompanying drawings.

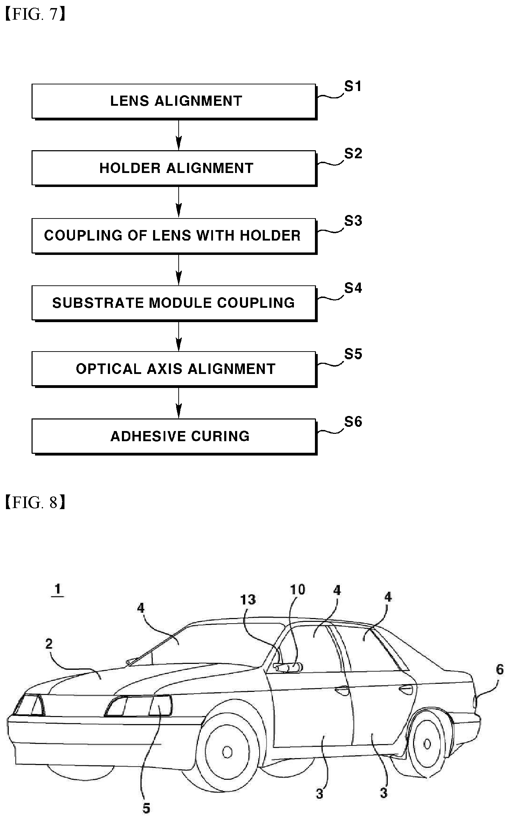

FIG. 8 is a perspective view of a vehicle according to an embodiment of the present invention.

Referring to FIG. 8, the vehicle (1) according to an embodiment of the present invention may include a body (2), a door (3), glass (4), headlamps (5), tail lamps (6), and a camera module (10).

The body (2) may be an exterior component of the vehicle (1). The body (2) may have various forms, such as a frame type or a monocoque type. One or more of the doors (3) may be coupled to the side of the body (2). Furthermore, the glass (4) may be coupled to the front and rear upper portions (where pillars are formed) of the body (2) and to the door (3). The headlamp (5) may be mounted at the front of the lower part of the body (2). The tail lamp (6) may be mounted at the rear of the lower part of the body (2).

A camera module (10) may be installed on the side of the body (2) or on one or more doors (3) disposed at the front. The camera module (10) may be installed in front of the glass (4) coupled to the door (3). That is, in the vehicle (1) of this embodiment, the side mirror may be replaced by the camera module (10).

The camera module (10) may capture images of the rear areas on both sides of the vehicle. The image captured by the camera module (10) may be electrically connected to a display portion (not shown) via an electronic control unit (ECU), etc. Therefore, the image captured by the camera module (10) may be controlled by the electronic control unit (ECU) and reproduced on the display portion.

An interior space for the driver may be formed within the body (2). A display portion may be installed within the body (2). The display portion may output the images captured by the camera module (10). The display portion may be installed on the dashboard (not shown) within the body (2).

The installation configuration of the camera module (10) within the aforementioned vehicle (1) is illustrative, and the camera module (10) may be employed in one or more of the vehicle's (1) front camera, side camera, rear camera, and black box.

Hereinafter, the camera module according to this embodiment is described with reference to the drawings.

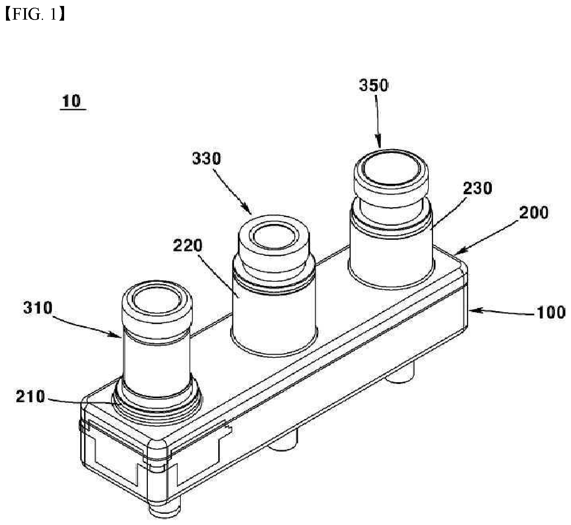

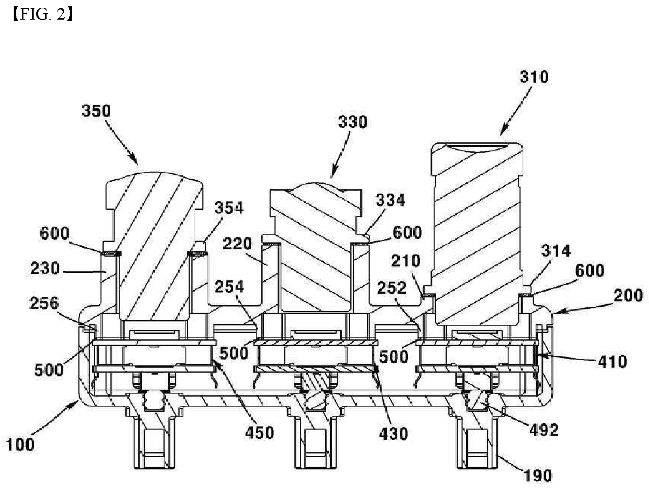

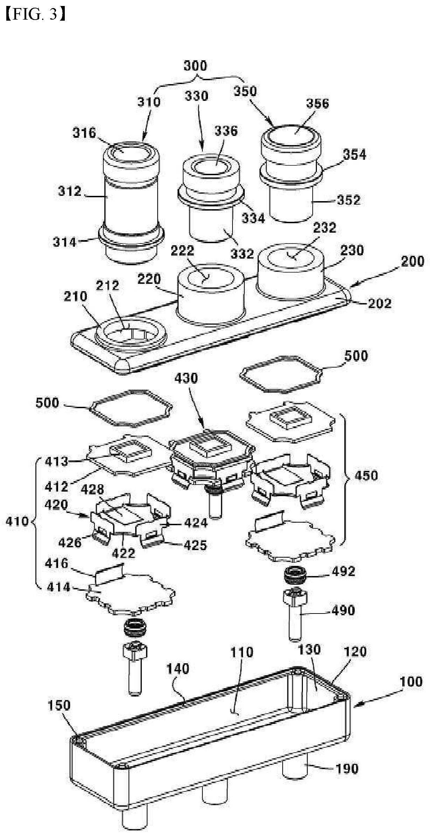

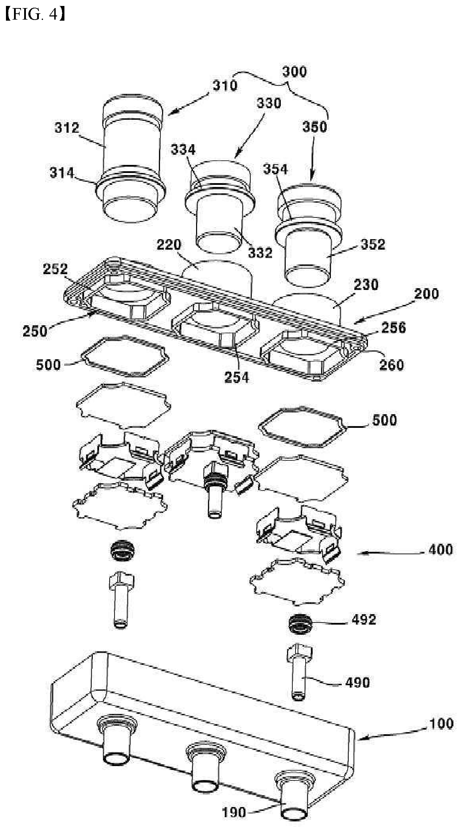

FIG. 1 is a perspective view showing the exterior of the camera module according to an embodiment of the present invention, FIG. 2 is a cross-sectional view of the camera module according to an embodiment of the present invention, FIG. 3 is an exploded perspective view of the camera module according to an embodiment of the present invention, and FIG. 4 is a view of FIG. 3 from a different angle.

With reference to FIGS. 1 to 4, the camera module (10) according to an embodiment of the present invention may comprise a housing (100), a holder (200), a lens module (300), a substrate module (400), a first adhesive member (500), and a second adhesive member (600).

The housing (100) may form the external shape of the camera module (10). Based on the direction of light incidence, the housing (100) may be termed the rear body, as it is disposed behind the holder (200). The housing (100) may be formed as a box-shaped structure with an open top surface. A space (110) may be formed within the housing (100). The substrate module (400) may be disposed within the space (110). The space (110) may be open towards the top.

A connector withdrawal (extraction) portion (190), formed with a shape projecting rearwardly relative to other areas, may be disposed on the rear surface of the housing (100). The connector withdrawal portion (190) may be formed in a pipe shape and may accommodate a connector (490), described later, within it. An external terminal is coupled to the connector withdrawal portion (190), thereby enabling the external terminal to be electrically connected to a connector (490).

A sealing member (492) may be disposed between the connector (490) and the connector withdrawal portion (190), thereby preventing external contaminants from entering the space within the camera module (10) through the connector withdrawal portion (190).

A coupling groove (140) may be formed on the front surface of the housing (100) facing the holder (200). The coupling groove (140) may be disposed at the front edge of the housing (100). The coupling groove (140) may have a closed-loop configuration. The coupling groove (140) may have a concave shape extending rearward from the front surface of the housing (100) relative to other areas. Specifically, a first projection (120) and a second projection (130) may be formed on the front surface of the housing (100), and the coupling groove (140) may be disposed between the first projection (120) and the second projection (130). The third projection (240) of the holder (200), described below, may engage with the coupling groove (140).

A protrusion (150) may be formed on the front surface of the housing (100). The protrusion (150) may have a shape projecting forward from the front surface of the housing (100) relative to other areas. The protrusions (150) may be provided in plural numbers and may be disposed respectively at the corner regions of the housing (100). The protrusions (150) may engage with coupling holes (260) formed on the rear surface of the holder (200), described below.

The holder (200) may form the external shape of the camera module (10) together with the housing (100). The holder (200) may be termed the front body, as it is disposed at the front of the housing (100). The holder (200) may be coupled to the lens module (300). The internal space of the camera module (10), formed by the coupling of the holder (200) and the housing (100), may accommodate the substrate module (400).

The holder (200) may include a body portion (202). The body portion (202) may include an upper plate and a side plate extending rearwardly from the edge of the upper plate. A third projection (240) may be formed on the lower surface of the side plate, having a shape protruding downwardly relative to other areas. The third projection (240) may be engaged with the coupling groove (140). Adhesive (not shown) may be disposed between the third projection (240) and the coupling groove (140). The adhesive may comprise epoxy.

A coupling hole (260) may be formed on the rear surface of the body portion (202). The coupling hole (260) may be formed concavely from the rear surface of the body portion (202) towards the front. The coupling hole (260) may be disposed at each of the four corner regions of the rear surface of the body portion (202). The coupling holes (260) may engage with protrusions of the housing (100).

A guide (250) may be disposed on the rear surface of the body portion (202). The guide (250) may have a shape projecting rearwardly from the rear surface of the top plate. The guide (250) may have a closed-loop configuration. The guide (250) may contact the front surface of the substrate module (400). The guide (250) may contact the front surface of the first substrate (412, see FIG. 3) described later. The guide (250) may comprise a first guide (252), a second guide (254), and a third guide (256), corresponding to the number of lens modules (300). The first to third guides (252, 254, 256) may be disposed spaced apart from each other in a direction perpendicular to the optical axis.

The holder (200) may comprise a barrel portion. The barrel portion may have a shape projecting forward from the front surface of the upper plate. The barrel portion may comprise a first barrel portion (210), a second barrel portion (220), and a third barrel portion (230). The first to third barrel portions (210, 220, 230) may be disposed at a mutual distance from one another in a direction perpendicular to the optical axis from the front surface of the holder (200). The first to third barrel portions (210, 220, 230) may each have a circular cross-sectional shape.

The first barrel portion (210) may have at least a portion of the first lens module (310), described below, coupled thereto. A first opening (212), into which the first lens module (310) is coupled, may be formed on the inner side of the first barrel portion (210).

At least a portion of the second lens module (330), described later, may be coupled to the second barrel section (220). A second opening (222), into which the second lens module (330) is coupled, may be formed on the inner side of the second barrel section (220).

At least a portion of the third lens module (350), described later, may be coupled to the third barrel portion (230). A third opening (232), into which the third lens module (350) is coupled, may be formed on the inner side of the third barrel portion (230).

Based on the optical axis direction, the lengths of the first to third barrel portions (210, 220, 230) may differ from one another. Based on the front surface of the body portion (202), the projection heights of the first to third barrel portions (210, 220, 230) may differ from one another. For example, the length of the second barrel portion (220) may be longer than the length of the first barrel portion (210) and shorter than the length of the third barrel portion (230). However, this is merely illustrative, and it is of course possible for the lengths of the first to third barrel portions (210, 220, 230) to be identical.

The lens module (300) may be disposed in front of the holder (200). The lens module (300) may be coupled to the front surface of the holder (200). The camera module (10) according to this embodiment may be a triple camera comprising three lens modules (300). However, this is merely illustrative; the camera module (10) may also be a dual camera comprising two lens modules, or may comprise four or more lens modules.

The lens modules (300) may comprise a first lens module (310), a second lens module (330), and a third lens module (350).

The first lens module (310) may be coupled to the first barrel portion (210). The first lens module (310) may include a first lens barrel (312) and a first lens (316) disposed within the first lens barrel (312). The first lens barrel (312) is formed as a cylindrical shape with open upper and lower ends, and a space for accommodating the first lens (316) may be formed inside. The first lens (316) may comprise a plurality of lens elements, which may be disposed along the optical axis direction within the first lens barrel (312).

A first flange (314) may be formed on the outer surface of the first lens barrel (312), protruding outwardly relative to other regions. The first flange (314) may have a circular cross-sectional shape. The first flange (314) may be disposed on the upper surface of the first barrel portion (210).

The second lens module (330) may be coupled to the second barrel portion (220). The second lens module (330) may comprise a second lens barrel (332) and a second lens (336) disposed within the second lens barrel (332). The second lens barrel (332) is formed as a cylindrical shape with its upper and lower surfaces open, and a space for accommodating the second lens (336) may be formed inside. The second lens (336) may comprise a plurality of lens elements, which may be disposed along the optical axis direction within the first lens barrel (332).

A second flange (334) may be formed on the outer surface of the first lens barrel (332), protruding outwardly relative to other regions. The second flange (334) may have a circular cross-sectional shape. The second flange (334) may be disposed on the upper surface of the second barrel portion (220).

The third lens module (350) may be coupled to the third barrel portion (230). The third lens module (350) may include a third lens barrel (352) and a third lens (356) disposed within the third lens barrel (352). The third lens barrel (352) is formed as a cylindrical shape with its upper and lower surfaces open, and a space for accommodating the third lens (356) may be formed inside. The third lens (356) may comprise a plurality of lens elements, which may be disposed within the third lens barrel (352) along the optical axis direction.

A third flange (354) may be formed on the outer surface of the third lens barrel (352), protruding outwardly relative to other regions. The third flange (354) may have a circular cross-sectional shape. The third flange (354) may be disposed on the upper surface of the third barrel portion (230).

The optical axis directional lengths of the first to third lens modules (310, 330, 350) may differ from one another. For example, the front surface of the third lens module (350) may be disposed forward of the front surface of the second lens module (330) and rearward of the front surface of the first lens module (310).

The substrate module (400) may be disposed within the space of the camera module (10). The substrate module (400) may be disposed within the space (110) of the housing (100). The substrate module (400) may be disposed behind the lens module (300). The substrate module (400) may comprise a first substrate module (410) that is disposed behind the first lens module (310), and a second substrate module (430) disposed behind the second lens module (330), and a third substrate module (450) disposition behind the third lens module (350). The first to third lens modules (310, 330, 350) may be disposed in the space (110) within the housing (100) at mutual intervals in a direction perpendicular to the optical axis.

The first to third lens modules (310, 330, 350) share identical configuration and structure; hence, the following description of the first to third lens modules (310, 330, 350) shall be based on the first lens module (310).

The first lens module (310) may comprise a first substrate (412), a second substrate (414), a connection substrate (416), and a shield can (420).

The first substrate (412) may be a printed circuit board. An image sensor (413) may be disposed on the first substrate (412). The image sensor (413) may be disposed facing the first lens module (310) in the optical axis direction. The image sensor (413) may be aligned with the first lens module (310) in the optical axis direction.

The second substrate (414) may be a printed circuit board. The second substrate (414) may be disposed behind the first substrate (412). The second substrate (414) may be disposed at a distance from the first substrate (412) in the optical axis direction. The connector (490) may be disposed on the rear surface of the second substrate (414).

A protrusion (415) may be formed on the side of the second substrate (414). The protrusion (415) may have a shape that projects outward from the side of the second substrate (414) relative to other areas. The protrusion (415) may be disposed on three of the four sides of the second substrate (414).

The connection substrate (416) may be a flexible printed circuit board (FPCB). The connection substrate (416) may electrically connect the first substrate (412) and the second substrate (414). Both ends of the connection substrate (416) may be connected to the first substrate (412) and the second substrate (414), respectively.

The shield can (420) may be disposed between the first substrate (412) and the second substrate (414). The shield can (420) may be spaced apart from the first substrate (412) and the second substrate (414) in the optical axis direction.

The shield can (420) may comprise a fence portion (424), a coupling portion (425), and a guide portion (428). The fence portion (424) may be disposed between the first substrate (412) and the second substrate (414). The upper surface of the fence portion (424) may contact the lower surface of the first substrate (412). The fence portion (424) may be arranged to form four sides, and a connection portion (422) may be disposed between adjacent fence portions (424).

The coupling portion (425) has a shape projecting downward from the lower surface of the fence portion (424) and may include a coupling hole (426). The protrusion (415) of the second substrate (414) may be coupled into the coupling hole (426) of the coupling portion (425). The inner surface of the coupling portion (425) may be formed with a slope such that the distance to the side of the second substrate (414) increases towards the rear. The coupling portion (425) may be disposed on three sides of the fence portion (424).

The guide portion (428) may have a shape that is bent inward and extended from the lower end of the fence portion (424). The guide portion (428) may be disposed on one side of the fence portion (424) where the coupling portion (425) is not formed. The guide portion (428) may be formed within the placement area of the connection substrate (416). The coupling of the connection substrate (416) may be guided via the outer surface of the guide portion (428).

The first adhesive member (500) may be disposed between the substrate module (400) and the holder (200). The first adhesive member (500) may be disposed between the front surface of the first substrate (412) and the rear surface of the guide (250). The first adhesive member (500) may be disposed between the front surface of the first substrate (412) of the first substrate module (410) and the first guide (252), between the front surface of the first substrate of the second substrate module (430) and the second guide (254), and between the front surface of the first substrate of the third substrate module (450) and the third guide (256), respectively.

The first adhesive member (500) may be epoxy. Upon curing of the first adhesive member (500), the bonded state between the substrate module (400) and the holder (200) may be maintained firmly. The alignment of the substrate module (400) with the holder (200) and the substrate module (400) with the lens module (300) through the curing of the first adhesive member (500) will be described later.

Meanwhile, in this embodiment, the first adhesive member (500) has been described as being provided in a plurality having a closed-loop shape corresponding to the number of lens modules (300), but this is not limiting. The first adhesive member (500) may also be implemented as a single adhesive member having a closed-loop configuration, disposed between the holder (200) and the housing (100).

The second adhesive member (600) may be disposed between the lens module (300) and the holder (200). The second adhesive member (600) may be disposed between the first flange (314) and the upper surface of the first barrel portion (210), between the second flange (334) and the upper surface of the second barrel portion (220), and between the third flange (354) and the upper surface of the third barrel portion (230).

The second adhesive member (600) may be epoxy. Upon curing of the second adhesive member (600), the bonded state between the lens module (300) and the holder (200) may be maintained firmly. The alignment between the lens module (300) and the holder (200) achieved through the curing of the second adhesive member (600) will be described later.

Hereinafter, the manufacturing process of the camera module (10) will be described.

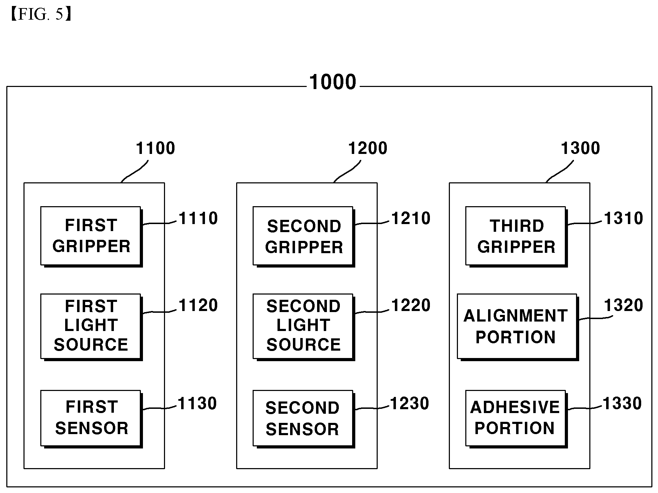

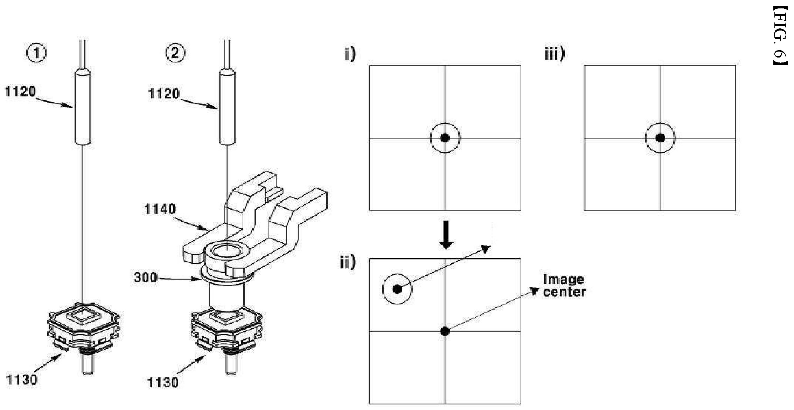

FIG. 5 is a block diagram of a manufacturing apparatus for a camera module according to an embodiment of the present invention, FIG. 6 is an illustration for explaining the alignment process of a lens module according to an embodiment of the present invention, and FIG. 7 is a flowchart of a manufacturing method for a camera module according to an embodiment of the present invention.

Referring to FIGS. 5 to 7, the camera module (10) according to an embodiment of the present invention may comprise: a step (S1) of aligning the lens module (300); a step (S2) of aligning the holder (200); a step (S3) of combining the lens module (300) and the holder (200); a step (S4) of combining the substrate module (400) with the holder (200) to which the lens module (300) is combined; a step (S5) of aligning the image sensor within the substrate module (400) with the lens within the lens module (300); and a step (S6) of curing the first adhesive member (500).

In detail, as illustrated in FIG. 5, the camera module manufacturing apparatus (1000) may comprise a lens module alignment portion (1100), a holder alignment portion (1200), and a substrate coupling portion (1300).

The lens module alignment portion (1100) may include a first gripper (1110), a first light source (1120), and a first sensor (1130). The lens module (300) may be coupled to the first gripper (1110). The first gripper (1110) moves in the X-axis, Y-axis, and Z-axis directions, thereby enabling the lens module (300) to be tilted.

The first light source (1120) may irradiate light towards the lens within the lens module (300) coupled to the first gripper (1110). The light may be laser light. Light irradiated through the first light source (1120) may pass through the entrance surface of the lens within the lens module (300) and be emitted through the exit surface.

The first sensor (1130) may be disposed behind the lens module (300) relative to the path of light irradiated from the first light source (1120). The first sensor (1130) may include a light-receiving sensor or an image sensor. Where the first sensor (1130) is an image sensor, the camera module manufacturing apparatus (1000) may be provided with a test substrate (not shown) for mounting the first sensor (1130).

As shown in FIG. 6, prior to the movement of the first gripper (1110) with the lens module (300) coupled therebetween, between the first light source (1120) and the first sensor (1130), light emitted from the light source (1120) may be directed towards the center of the first sensor (1130).

Next, with the lens module (300) disposed between the first light source (1120) and the first sensor (1130), light emitted from the first light source (1120) may pass through the lens within the lens module (300) and be irradiated onto the first sensor (1130). In this case, as shown in FIG. 6(ii), the position of the light received by the first sensor (1130) may also be misaligned due to the misalignment of the lens module (300).

Accordingly, the controller (not shown) moves the position of the lens module (300) via the first gripper (1110) in a direction perpendicular to the optical axis or the direction of the optical axis, based on the positional information of the light received from the first sensor (1130), so that, as shown in iii) of FIG. 6, so that light irradiated from the first light source (1120) passes through the lens module (300) and is received at the center of the first sensor (1130).

The holder alignment portion (1200) can align the holder (200). The holder alignment portion (1200) may include a second gripper (1210), a second light source (1220), and a second sensor (1230). The second gripper (1210) engages the holder (200) and, through movement in the X-axis, Y-axis, and Z-axis directions, enables the holder (200) to be tilted.

The second light source (1220) may irradiate light towards the holder (200). For example, the light irradiation from the second light source (1220) may be directed towards multiple spots, such as the four corners of the holder (200).

The second sensor (1230) is capable of receiving light from the second light source (1220) reflected from the holder (200). Accordingly, the controller can operate the second gripper (1210) to align the position of the holder (200) along the optical axis, based on the positional information of the light received by the second sensor (1230).

Once alignment of the holder (200) is complete, the aligned lens module (300) and holder (200) may be mutually bonded via the second adhesive member (600) through the lens module alignment portion (1100).

The substrate coupling portion (1300) can couple the substrate module (400) to the rear surface of the holder (200) where the lens module (300) is coupled. The substrate coupling portion (1300) comprises a third gripper (1310) to which the substrate module (400) is coupled, an alignment portion (1320) for aligning the position of the substrate module (400) via the third gripper (1310), and an adhesive portion (1330) for applying and curing the first adhesive member (500) between the holder (200) and the substrate module (400). Curing of the first adhesive member (500) may be performed after applying uncured epoxy between the holder (200) and the substrate module (400), and after performing optical axis alignment of the lens module (300) and the image sensor (413) via the alignment unit (1320).

According to this embodiment, the lens module and the holder, and the holder and the substrate modue are coupled through adhesive member after respectively aligning the lens module and the holder through separate processes prior to coupling the substrate module, which offers the advantage of minimizing the occurrence of optical axis deviation caused by assembly tolerances between multiple components, compared to conventional camera modules where only the alignment process of the lens and image sensor with the attached holder is performed.

The foregoing description of the components constituting the embodiments of the present invention as being combined or operating in combination does not imply that the invention is necessarily limited to these embodiments. That is to say, within the scope of the objectives of the present invention, all components may optionally be combined and operate in one or more ways. Furthermore, terms such as "comprising", "including", or "having" as described above, unless specifically stated otherwise, imply that the component may be present and should therefore be interpreted as allowing for the inclusion of other components rather than excluding them. All terms, including technical or scientific terms, unless otherwise defined, have the same meaning as generally understood by a person skilled in the art to which the invention pertains. Commonly used terms, such as those defined in dictionaries, should be interpreted in accordance with their meaning in the context of the relevant technology and, unless explicitly defined herein, should not be interpreted in an idealized or overly formalistic sense.

The foregoing description merely exemplifies the technical concept of the present invention. Those skilled in the art to which the present invention pertains will appreciate that various modifications and variations may be made without departing from the essential character of the invention. Therefore, the embodiments disclosed herein are intended to illustrate the technical concept of the invention, not to limit it, and the scope of the technical concept of the invention is not restricted by these embodiments. The scope of protection of the invention shall be interpreted by the appended claims, and all technical concepts within the scope equivalent thereto shall be interpreted as falling within the scope of the invention.

## Claims

1. A camera module, comprising:
a holder including a first barrel portion, a second barrel portion, and a third barrel portion;
a first lens module coupled to the first barrel portion and including a first flange;
a second lens module coupled to the second barrel portion and including a second flange;
a third lens module coupled to the third barrel portion and including a third flange;
a housing disposed at the rear of the holder;
a first substrate module disposed in a space within the housing and facing the first lens module in the optical axis direction;
a second substrate module disposed in the space within the housing and facing the second lens module in the optical axis direction;
a third substrate module disposed in the space within the housing and facing the third lens module in the optical axis direction;
first adhesive members disposed between the holder and the first substrate module, between the holder and the second substrate module, and between the holder and the third substrate module; and
second adhesive members disposed between the first flange and the first barrel portion, between the second flange and the second battel portion, and between the third flange and the third barrel portion.

2. The camera module of claim 1, wherein each of the first adhesive members and the second adhesive members is epoxy.

3. The camera module of claim 1, wherein a rear surface of the holder includes a guide protruding rearwards, which is coupled with the front surface of the first substrate module, the front surface of the second substrate module, and the front surface of the third substrate module.

4. The camera module of claim 1, wherein the first substrate module, the second substrate module, and the third substrate module each comprise: a first substrate with an image sensor disposed on its front surface; a second substrate disposed at the rear of the first substrate; a connecting substrate connecting the first substrate and the second substrate; and a shield can disposed between the first substrate and the second substrate.

5. The camera module of claim 1, wherein the projected height of the first to third barrel portions from the front of the holder differs from one another.

6. The camera module of claim 1, wherein the front surfaces of the first to third lens modules are disposed with a step-down configuration relative to each other along the optical axis direction.

7. The camera module of claim 1, wherein the first adhesive member and the second adhesive member may each have a closed-loop configuration.

8. The camera module of claim 4, wherein the second substrate includes a connector protruding rearwardly from a rear surface thereof, and
wherein the housing includes a connector withdrawal portion protruding rearwardly to accommodate the connector therein.

9. A manufacturing method of camera module comprising: (a) aligning a lens module via a first light source, a first sensor, and a first gripper;
(b) aligning a holder using a second light source, a second sensor, and a second gripper;
(c) coupling the lens module from step (a) with the holder from step (b);
(d) coupling the substrate module with the rear surface of the holder according to step (c); and
(e) aligning the optical axes between the image sensor within the substrate module and the lens within the lens module.

10. The method of claim 9, further comprising: applying a first adhesive member between the substrate module and the holder prior to step (e); and curing the first adhesive member after step (e).
